(19) Europäisches Patentamt
European Patent Office
Office européen des brevets

(11) Publication number : **0 483 087 A1**

(12) # EUROPEAN PATENT APPLICATION

(21) Application number : **91850094.3**

(22) Date of filing : **17.04.91**

(51) Int. Cl.$^5$ : **B32B 17/10,** C03C 27/12, B32B 31/00

(30) Priority : **23.10.90 US 602350**

(43) Date of publication of application :
**29.04.92 Bulletin 92/18**

(84) Designated Contracting States :
**AT BE CH DE DK ES FR GB IT LI LU NL SE**

(71) Applicant : **ARTISTIC GLASS PRODUCTS COMPANY**
**Postal Drawer C**
**Trumbauersville, Pennsylvania 18070-0051 (US)**

(72) Inventor : **Bolton, Nelson**
**RD 1**
**Quaktertown, PA (US)**
Inventor : **Smith, Novis W.**
**412 South Perth Street**
**Philadelphia, PA (US)**

(74) Representative : **Onn, Thorsten et al**
**AB STOCKHOLMS PATENTBYRA Box 23101**
**S-104 35 Stockholm (SE)**

(54) **Method for preparing laminated safety glass.**

(57) A method for preparing a transparent laminated article comprising an ionomer resin layer and a transparent sheet of glass or polycarbonate laminated to at least one surface of the ionomer layer which comprises the steps of

A. providing a knurled or embossed surface on at least one side of at least one ionomer film,

B. priming a surface of a glass or polycarbonate sheet,

C. placing the primed surface of said sheet in contact with a knurled or embossed surface of said ionomer, and then

D. applying heat and pressure or vacuum to the ionomer film and glass or polycarbonate sheet(s) to form a laminate.

EP 0 483 087 A1

## Field of the Invention

The present invention relates to a method for preparing laminated safety glass structures having good optical clarity. More particularly, the invention relates to the manufacture of laminated safety glass structures having an ionomer layer which have good optical clarity and are resistant to delamination. The safety glass structures may be used for aircraft, land vehicles, as armor structures for security installations, and the like.

## Background of the Invention

Energy-absorbing laminates for use as safety glass is well known. Customarily, these products are formed from transparent materials of different compositions and are composed of an outer layer of one or more plies and an inner layer which is bonded together with the outer layer by a resinous interlayer. Usually, a relatively thick glass outer layer is combined with at least one relatively thin inner layer.

Laminated safety glass must satisfy certain quality requirements according to the purpose for which it is to be used. In the case of motor vehicles, these quality requirements are laid down in the "Strassenverkehrszulassungsordnung" of the German Federal Republic, Section 22, No. 29, in "Motor Vehicle Safety Standards" Nos. 205 and 208, and in U.S.A. Standard Z 26.1-1966. Quality requirements for use in the building industry are established in "American National Standard Institute" Standard Z 97.1-1966, for use as bullet-proof material they are specified in "Underwriters Laboratories" Standard 752.

In the specification and claims the terms "ionomer" or "ionomer resin" mean an extrudable resin comprising ionically cross-linked ethylene or alpha olefin-carboxylic acid copolymers and mixtures thereof. Of interest are the ionically cross-linked copolymers prepared from a combination of ethylene, styrene or propylene monomers and acrylic acid, methacrylic acid and maleic anhydride monomers. Furthermore, of particular significance are the sodium or zinc cross-linked ethylene or alpha olefin-carboxylic acid copolymers, i.e. methacrylic or acrylic acid, copolymers. Properties which distinguish ionomer resins from other polyolefin heat-seal polymers are their high clarity, melt strength, solid-state toughness and resistance to oil/fat permeation. Ionomer resins are generally commercially available as either a sodium or a zinc ionomer, and are available in a wide variety of grades. Amine salts of the copolymers are also included, as are the acid form, partially neutralized acid form, and metal salts of the acid copolymers. Although all grades of ionomer resins generally exhibit the properties noted above when compared to other thermoplastic polymers, sodium ionomers are known for exceptional toughness and resistance to fats and oils, while zinc ionomers exhibit outstanding adhesion to unprimed foil and possess excellent chemical resistance. Sodium ionomers have proved to provide the best clarity, the zinc ionomers proving to be hazy at times. The metal ion free or unneutralized version such as Nucrel® or Primcor® are generally clear but having lower strength.

Various grades of ionomer resins are available for extrusion coating and film extrusion. It is also known that ionomer resins can be laminated with other plastic resins and exhibit adhesion to other polyolefins, nylon resins and coextrudable adhesive resins often used as bonding layers in multi-ply coextruded or laminated structures. A very wide variety of partially metal cation neutralized ionomer resins are manufactured by E.I. DuPont de Nemours and Company under the registered trademark "SURLYN". Unneutralized ionomer resins are those manufactured by DuPont under the name NUCREL (ethylene-methacrylic acid copolymer) and PRIMACOR (ethylene-acrylic acid copolymer) manufactured by DOW Chemical Company.

The terms "knurled or embossed surface" as used herein include any form of raised or grooved surface including those prepared with conventional crimping, embossing and knurling apparatus.

## Summary of the Invention

According to the present invention there is provided a novel process for preparing an optically transparent laminate composed of an ionomer resin layer and at least one glass and/or polycarbonate sheet. The process comprises the steps of:

A. providing a knurled or embossed surface on at least one side of an ionomer film or stack of films,

B. priming a surface of a glass or polycarbonate sheet with a priming agent which is preferably a silane or titanate coupling agent,

C. placing the primed surface of the glass or polycarbonate sheet in contact with the knurled or embossed surface of the ionomer layer, and then applying sufficient heat and pressure to the combination to form a laminate.

It has been found that when the ionomer film is knurled or embossed, gases and bubbles which commonly form between the layers of ionomer when the assembly is heated are easily removed. The knurled or embossed surface disappears as the temperature rises and pressure is applied.

Preferably, the assembly is placed prior to heating in a sealed container or a bag of the type disclosed in U.S. Pat No. 3,311,517, which is herein incorporated by reference.

The assembly may be heated in an oven and then passed through nip rollers to accomplish the lamination. This can then be followed by autoclave treatment without bagging.

The assembly is treated in a conventional manner such as disclosed in U.S. Pat. No. 4,668,574. That is, the assembly is heated to a temperature about 255-280°F and under a pressure of about 20 to 200 psi. Advantageously, after the heat treatment under pressure the assembly is cooled to a temperature of about 150°F within a period of about 30 to 45 minutes to prevent clouding.

The method of the invention can be used to form laminates having a single glass or polycarbonate sheet, an ionomer sandwiched between a first glass sheet and polycarbonate sheet or a second glass sheet or multi-layered laminates as described in U.S. Pat. No. 4,619,973, which is herein incorporated by reference.

It is an object of the invention to provide a process for preparing a laminate which is free of bubbles and possesses high optical clarity.

Other objects and a fuller understanding of the invention will be had by referring to the following description and claims of a preferred embodiment, taken in conjunction with the accompanying drawings, wherein like reference characters refer to similar parts throughout the several views.

## Brief Description of the Drawings

Fig. 1 is a perspective view of an ionomer having a knurled surface for use in the process of the invention;
Fig. 2 is an exploded view showing a plurality of knurled ionomer sheets between a pair of sheets.
Fig. 3 is a front view partially in cross-section showing the laminate of Fig. 2, after being subjected to heat and compression, and;
Fig. 4 is a front view of a laminate formed by the process of the invention with a hard coat.

## Description of the Preferred Embodiments of the Invention

Although specific terms are used in the following description for the sake of clarity, these terms are intended to refer only to the particular structure of the invention selected for illustration in the drawings, and are not intended to define or limit the scope of the invention.

It is understood that the following description omits many structural elements commonly found in laminating glazing units for aircraft, such as mounting frames, such as those in U.S. Pat. No. 3,081,205 to Shorr, electrical terminal blocks and special insulators for lead lines connecting bus bars for the defogging or deicing device of U.S. Pat. No. 3,410,739 to Orcutt, temperature sensing devices, such as those shown in U.S. Pat. No. 3,789,191 to Spindler, reinforcing frames such as those shown in the aforesaid Orcutt and Shorr patents and other structural elements well known in the art.

As illustrated in Fig. 1, an ionomer layer 10, which is used as an interlayer between two optically clear sheets of glass or the combination of glass and polycarbonate, is provided with raised portions 11 on at least one side. The raised portions permit the escape of off-gases during the laminating process of the invention.

Fig 2. illustrates an assembly 12 which may be used in the process of the invention. The assembly comprises a glass sheet 14 having a primer on its inner surface, a plurality of knurled ionomer sheets 10 and a glass or polycarbonate sheet 14′ having a primed surface 16. The ionomer layer adjacent sheet 14′ advantageously is knurled on both surfaces.

Fig. 3 illustrates the assembly 12 after undergoing treatment under heat and pressure pursuant to the invention whereby a unitary resinous layer 13 is found free of any bubbles.

Fig. 4 illustrates another form of laminate 15 which may be prepared by the process of the invention wherein an ionomer layer 16 is bound to a polycarbonate sheet 17 which contains a hard coat 18 on its outside surface. When glass is used in lieu of the polycarbonate, it is not necessary to apply a hard coat.

According to the process of the invention, an ionomer film (50-60 mils) is extruded, cut into a desired form for example, 12 inch squares, and passed through a knurling apparatus to knurl at least one side. The ionomer is preferably also knurled on the surface adjacent the glass or polycarbonate layer. The polycarbonate preferably is coated with a hard coat such as a siloxane to prevent scratches. The knurled ionomer sheets are then cleaned with isopropanol and stacked on a primed outer sheet or between two primed sheets. The amount of ionomer sheets utilized depends on the types of glass desired. A thickness of about 30-60 mils is generally sufficient for security glass. The stacked assembly is subjected to heat and pressure sufficient to cause permanent adherence of one layer to another. Desirably, the stacked assembly is passed through rollers to lightly adhere the layers together. Preferably the assembly is placed in a so-called "polymar" bag of the type disclosed in U.S. Pat. No. 3,311,517. The bag comprises an outer ply of polyethylene terephthalate and an inner layer

of polyethylene. The bag is generally inserted into a second bag of the same material evacuated and sealed. The sealed bag is placed in an autoclave at a temperature of about 255-280°F for about 3-20 minutes under about 20-200 psi pressure in a vacuum.

The assembly is then cooled to about 150°F within about 30 to 45 minutes to avoid clouding and the pressure is reduced.

The thickness of the inner and outer layers in accordance with this invention can be selected to be variable depending on the purpose for which they are used. The number of individual layers of the composite article is likewise selectable as desired. This makes the article useful in the construction field in connection with doors and door systems, in windows and window constructions, in parapets for railings, balconies, or facades, in partitions as room dividers, balcony partitions, or lot enclosures, in connection with roofs or roof components of terraces, skylights, or greenhouses, in telephone booth or computer system enclosures, display cabinets, cashier's cages, prisons, or rooms endangered by explosion or implosion, in each case as safety glass for protection against penetration, breakin, shelling, fire, sound, cold, warmth, heat, optionally with alarm or heating wires, respectively.

Ionomer resins which can be used in the invention include those disclosed in U.S. Pat. No. 4,619,973, which is herein incorporated by reference. Such ionomers can be obtained by combining a copolymer of ethylene-methacrylic acid or ethyleneacrylic acid and a polyamine which contains at least one $R-CH_2-NH_2$ group, and the R may contain: $(CH_2NH_2)_x$; and, $(R'R''NH)_y$, where x=1 or more, and y=o or more. R'and R″ may be any organic groups. The preferable structure of the diamine is:

$$NH_2CH_2-(R)-CH_2NH_2$$

where R contains from one to twenty-five carbon atoms; R may be aliphatic, alicyclic or aromatic; and R may also contain:

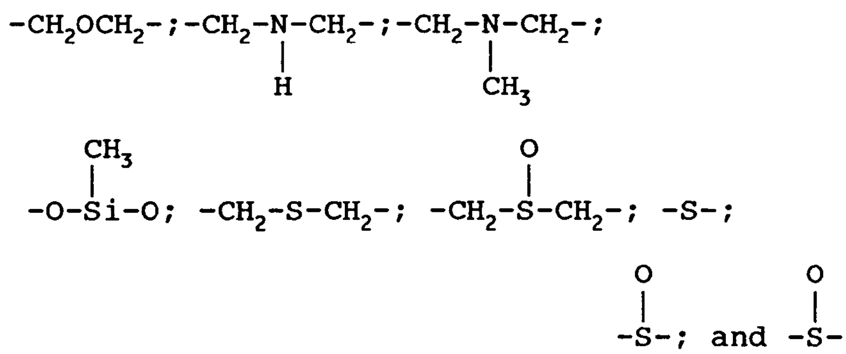

Examples of the diamines which can be used are
1,12-diaminododecane;
1,6-diaminohexane;
Bis (1,3-aminomethy)cyclohexane(BAC); and
1,3-diaminomethylxylene.

In addition, the copolymer may already be partially neutralized with up to 90% of a metal cation such as sodium or other alkali metal, ammonium salt, zinc or an aluminum salt. A particular example of such a copolymer is "SURLYN" 1601, manufactured by the Polymer Products Department of the DuPont Company.

Any of the usual types of glass used in so-called safety applications can be used in conjunction with the process of the present invention including chemically and thermally strengthened or tempered glass as well as common untempered glass where indicated. Amongst the glasses which may be used are silicate glass, E-glass, Toro ® glass, etc. The type used depends upon the intended use of the laminate. The nature and composition of some of the various glasses is known in the art and described, for example, in the "Encyclopedia of Chemical Technology" by Kirk-Othmer, published by Interscience Encyclopedia Inc. New York, NY, Vol. 7, pages 181-189, et seq., which is herewith incorporated by reference.

Adhesion promoting primers are used to promote adhesion between the ionomer resin and the glass polycarbonate respectively. Such materials are well known an including, among others, vinyl alkoxy silanes, amino-alkylalkoxy silanes, alkoxy silanes, silyl peroxides and amino-alkoxy silane, such materials being described in U.S. Pat. No. 3,666,614, and 4,952,460, which are incorporated herein by reference.

Primers, particularly suitable for glass, and the glass/ionomer resin interface include silanes such as those produced under the registered trademarks "Z-6040" and "Z-6020" by Dow Chemical Company. Other primers suitable for the polycarbonate/ionomer resin interface in particular, include organic amines, usually in a diluted solution with an inert solvent (unlikely to attack the polycarbonate, e.g. alkanes and alcohols), such as aliphatic

or polyethylene amines or ethanolamines, and specifically diethylenetriamine . Other specific primers include diisocyanates (toluene diisocyanate) and polyacrylic-acid (produced under the registered trademark "ACRYSOL" by the Rohm and Haas Company).

The present invention is further illustrated by the following examples.

Example 1

A locomotive windshield or windscreen is prepared by stacking twelve sheets of diamine cross-linked ionomer sheets (5 mils) which have been embossed on at least one surface on an outboard layer of 250 mils of strengthened glass coated with Z-6040 primer of Dow Chemical Company. An inboard layer of 1.5 mils of chemically tempered glass, as disclosed in U.S. Pat. No. 3,395,998 and commercially available from PPG Glass Company of Pittsburg, PA. is used to complete the assembly. The assembly was placed in a vacuum bag and heated to 250°F for 45 minutes in an autoclave. The pressure was released and the assembly cooled to about 150°F in 30 minutes. The laminate can then be placed in a suitable glazing structure. The laminate was free of bubbles.

Example 2

A diamine cross-linked partially neutralized ethylene-acrylic acid ionomer resin was added to the resin port of a small extruder having an extruding barrel temperature which was maintained at 325°-400°F. A film (100-120 mils) was extruded and cut into twelve inch squares, knurled and then stacked to about one-half inch thickness between one-eighth inch sheets of tempered glass plates. The assembly was placed in a so-called "polymar" bag of the type disclosed in U.S. Pat. No. 3,311,517 to Keslar et al. The bag comprises an outerply of polyethylene terephthalate and an inner ply of polyethylene bonded thereto. The bag was inserted into a second bag of the same material, evacuated and sealed. The sealed unit was placed in an autoclave at 280°F, for 2 hours under 20 psi pressure in a vacuum. The unit was then cooled to 150°C in 30 minutes and the pressure reduced. The assembly was removed from the autoclave and the bags and plastic wrapping were removed from the assembly.

The resulting bubble-free windshield is then ready to insert into a suitable support or frame and secured therein.

If desired, a bus bar may be inserted prior to antoclaving which contains a resistance means which aids in preventing delamination and removal.

The laminated articles of this invention have utility in a variety of different environments including security installations, armored vehicles, banks, factories, airplanes, space vehicles, submarines, and the like.

The form of the invention shown and described herein represents an illustrative preferred embodiment and variations thereof. It is understood that various changes may be made without departing from the gist of the invention as defined in the claims.

## Claims

1. A method for preparing a transparent laminated article comprising an ionomer resin film and a transparent sheet of glass or polycarbonate laminated to the ionomer film which comprises the steps of;
   A. providing a knurled or embossed surface on at least one side of at least one ionomer film,
   B. priming a surface of a glass or polycarbonate sheet,
   C. placing the primed surface of said sheet in contact with the knurled or embossed surface of at least one said ionomer to form an assembly and then
   D. applying heat and pressure or vacuum to the assembly to form a laminate.

2. The method of claim 1 wherein said ionomer film and sheet are heated under a pressure of about 20 to 200 psi.

3. The method of claim 2 wherein said ionomer film and sheet are heated to a temperature of about 255-280°F.

4. The method of claim 3 wherein the temperature is reduced to about 150°F within about 30 to 45 minutes.

5. The method of claim 1 wherein said ionomer is a diamine cross-linked copolymer prepared from ethylene

and methacrylic or acrylic acid monomers.

6. The method of claim 8 wherein said ionomer is the partially neutralized acid form of an ethylene-methacrylic or acrylic acid copolymer.

7. The method of claim 1 wherein said ionomer is sandwiched between two sheets of glass.

8. The method of claim 1 wherein said ionomer is embossed or knurled on both sides.

9. The method of claim 1 wherein said ionomer is sandwiched between a glass sheet and a polycarbonate sheet.

10. The method of claim 1 wherein said ionomer is sandwiched between a pair of polycarbonate sheets.

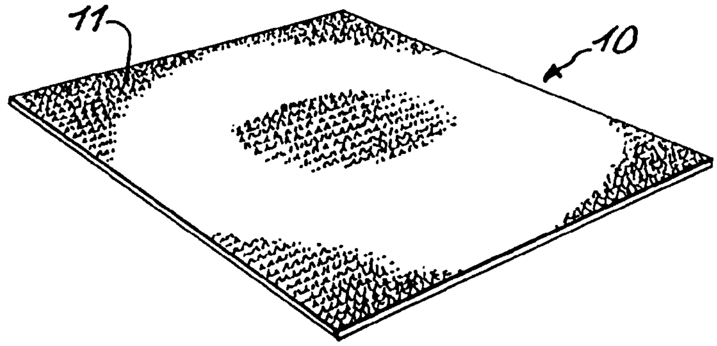


Fig. 1.

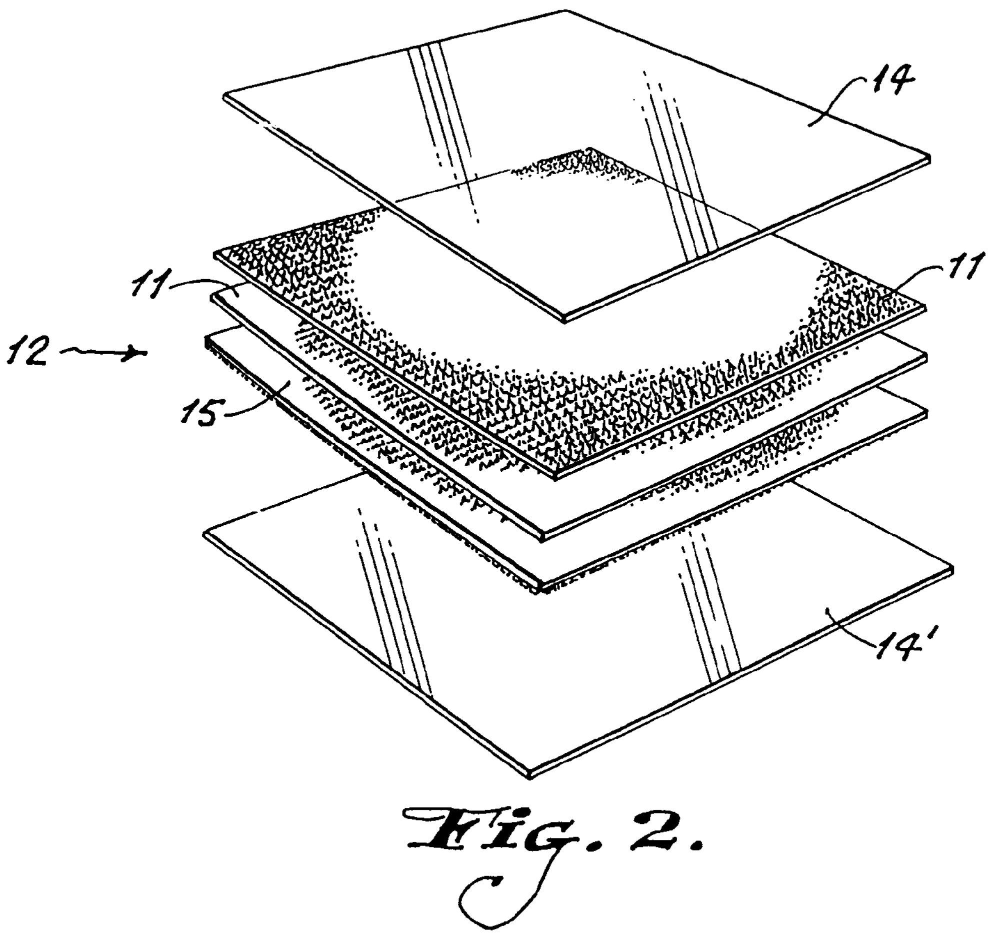


Fig. 2.

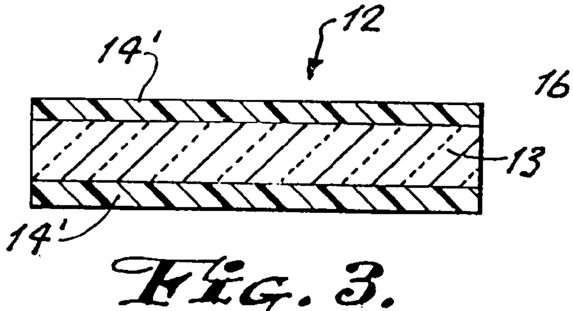


Fig. 3.

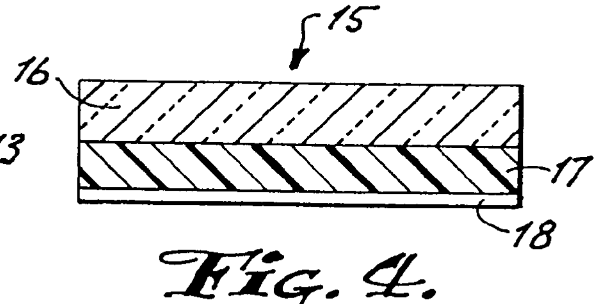


Fig. 4.

European Patent Office

# EUROPEAN SEARCH REPORT

Application Number

EP 91 85 0094

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y<br>A | US-A-4 668 574 (NELSON P. BOLTON)<br>* the whole document *<br>--- | 1<br>5,9,10 | B32B17/10<br>C03C27/12<br>B32B31/00 |
| Y<br><br>A | FR-A-743 052 (S.A. DES VERRERIES DE LA GARE ET A. BELOTTEREUNIES)<br>* page 1, line 32 - page 2, line 14 *<br>--- | 1<br><br>2,8 | |
| A | DE-A-2 622 065 (MONSANTO CO)<br>* page 2, paragraph 2 *<br>* page 6, paragraph 3 - page 7, line 3 *<br>--- | 1 | |
| A | DE-B-1 174 975 (E.I. DU PONT DE NEMOURS AND COMPANY)<br>* column 1, line 1 - line 13 *<br>----- | 1 | |
| | | | TECHNICAL FIELDS SEARCHED (Int. Cl.5 ) |
| | | | B32B<br>C03C |

The present search report has been drawn up for all claims

| Place of search | Date of completion of the search | Examiner |
|---|---|---|
| THE HAGUE | 06 FEBRUARY 1992 | VAN BELLEGHEM W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)